(19) Europäisches Patentamt

European Patent Office

Office européen des brevets

(11) EP 0 636 873 B1

(12) EUROPÄISCHE PATENTSCHRIFT

(45) Veröffentlichungstag und Bekanntmachung des Hinweises auf die Patenterteilung:
29.09.1999 Patentblatt 1999/39

(51) Int Cl.$^6$: G01N 1/24

(21) Anmeldenummer: 94111710.3

(22) Anmeldetag: 27.07.1994

(54) **Staubsammelvorrichtung**

Device for collecting dust

Dispositif collecteur de poussière

(84) Benannte Vertragsstaaten:
AT BE CH DE DK ES FR GB GR IE IT LI LU MC NL PT SE

(30) Priorität: 30.07.1993 DE 4325664

(43) Veröffentlichungstag der Anmeldung:
01.02.1995 Patentblatt 1995/05

(73) Patentinhaber: FRAUNHOFER-GESELLSCHAFT ZUR FÖRDERUNG DER ANGEWANDTEN FORSCHUNG E.V.
80636 München (DE)

(72) Erfinder:
• Koch, Dr. Wolfgang
31634 Steimbke (DE)
• Lödding, Dipl.-Phys. Hubert
31275 Lehrte (DE)
• Dunkhorst, Dipl. Ing. Wilhelm
4953 Petershagen (DE)

(56) Entgegenhaltungen:
EP-A- 0 352 126          US-A- 4 301 002
US-A- 4 670 135          US-A- 4 972 957

• IEEE TRANSACTIONS ON NUCLEAR SCIENCE, Bd.NS-22, Nr.2, April 1975, NEW YORK US Seiten 849 - 855 STEVENS ET AL. 'Recent developments in air particulate monitoring'

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Staubsammelvorrichtung mit in durch Strömungsrichtung hintereinander geschalteten virtuellen Impaktoren.

Staubsammelvorrichtungen für in Aerosolen enthaltenen Partikeln sind bekannt. Ein gängiges Verfahren verwendet dazu Impaktoren. Das Prinzip der Impaktoren beruht darauf, daß ein durch eine Düse gebündelt ausströmender und mit hoher Geschwindigkeit auf eine Prallplatte auftreffender Aerosolstrahl seitlich abgelenkt wird. Dabei werden die größeren Teilchen infolge ihrer Trägheit meßbar weniger abgelenkt als kleinere Teilchen. Dadurch läßt sich eine Auftrennung in größere und kleinere Teilchen bewerkstelligen.

Bei virtuellen Impaktoren wird die Strömungsumlenkung durch ein nachfolgendes Luftpolster erreicht.

Aus der DE-OS 31 04 878 ist es bekannt, disperse Aerosolzusammensetzung in einer fraktionierten Absetzung von Teilchen auf Absetzflächen eines Kaskadenimpaktors zu analysieren, die Masse der abgesetzten Teilchen zu bestimmten und diese Teilchen anschließend aus dem Impaktor zu entfernen. Dieser Kaskadenimpaktor ist mit Kammern versehen, die in Strömungsrichtung des Aerosols angeordnet sind, wobei jede Kammer durch 2 Diaphragmen begrenzt ist. Dabei dient das in Strömungsrichtung gesehen untere Diaphragma als Absetzfläche für die Teilchen und besitzt eine Düse zum Durchgang des Aerosols zur nächsten Kammer.

Aus der DE 37 37 129 ist ein Gerät mit bedingter Zeit- und Partikelgrößenauflösung zur Bestimmung der Konzentration von Staub, insbesondere Holzstaub in der Atemluft an Arbeitsplätzen bekannt. Bei dieser Vorrichtung sind um einen virtuellen Impaktor, parallel, im Kreis herum wenigstens 5 Impaktoren angeordnet.

In dieser Vorrichtung wird der Feinstaub vom Grobstaub abgetrennt und hinterher mittels physikalischen Meßverfahren bestimmt.

EP-A- 352 126, US-A- 4 972 957 und US-A- 4 301 002 offenbaren je eine Staubsammelvorrichtung für in Aerosolen enthaltene Partikel mittels virtueller Impaktoren, bei der in einem Gehäuse hintereinander ein virtueller Impaktor und eine Enddüse mit einem nach ihrer Austrittsöffnung angeordneten Endfilter konzentrisch angeordnet sind, und ein am Gehäuse angeordneter Einlaß für den Aerosolstrom und Ausgänge für die abgetrennten Teilströme vorhanden sind. Der Austrittsöffnung der Umlenkdüse des Impaktors ist immer ein weiterer Filter nachgeordnet, der in EP-A- 352 126 und US-A- 4 972 957, nicht aber in US-A- 4 301 002, konzentrisch zum Impaktor, zur Enddüse und zum Endfilter angeordnet ist.

Diese Geräte sind in der Lage, Staubfraktionen mit unterschiedlichen Partikeldurchmessern z.B. nach der EN 481 (Festlegung von Konventionen von Partikelgrößenfraktionen zur Meßung von Schwebstoffen am Arbeitsplatz) in einem Gerät mit kompakter Bauweise zu klassifizieren.

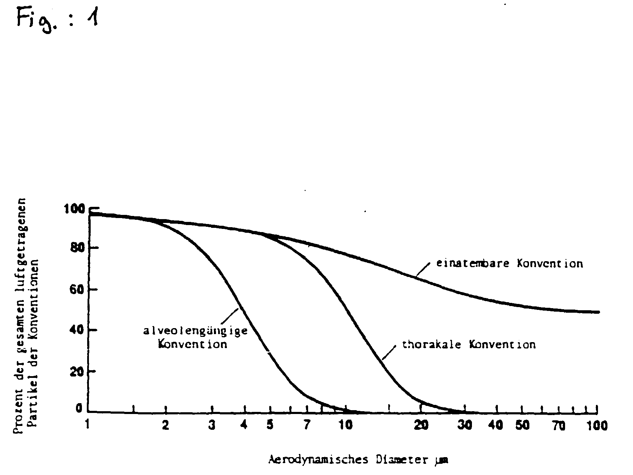

So wird in der vorstehend erwähnten europäischen Norm EN 481 (Festlegung von Konventionen von Partikelgrößenfraktionen zur Meßung von Schwebstoffen am Arbeitsplatz) vorgeschrieben, daß in Zukunft drei physiologisch relevante Staubfraktionen am Arbeitsplatz gemessen werden sollen. Dies sind die einatembare Fraktion, die thorakale Fraktion und die alveolengängige Fraktion (Figur 1).

Es ist die Aufgabe der vorliegenden Erfindung, eine Verbesserle Staubsammelvorrichtung sowie ein Verfahren zum Betreiben einer derartigen Vorrichtung anzugeben, mit der es möglich ist, unterschiedliche Staubfraktionen aus einem gegebenen Aerosolstrom zu klassifizieren, insbesondere die durch die Norm EN 481 definierten Staubfraktionen.

Die Lösung dieser Aufgabe wird erfindungsgemäß durch die im Anspruch 1 angegebenen Merkmale erreicht. Vorteilhafte Weiterbildungen der Aufgabenlösung hinsichtlich der Vorrichtung ergeben sich aus den Unteransprüchen 2 bis 7.

Das Verfahren kennzeichnet sich durch die im Patentanspruch 8 angegebenen Merkmale. Die Unteransprüche zeigen vorteilhafte Weiterbildungen auf.

Dadurch, daß nun in einem Gehäuse in Durchströmungsrichtung hintereinander mindestens ein virtueller Impaktor mit einem ersten Filter, und eine Düse mit einem Endfilter konzentrisch um eine die Durchströmungsrichtung bildende Achse angeordnet sind, wird erreicht, daß ein in die Staubsammelvorrichtung geführter Aerosolstrom mit einem gegebenen Partikelvolumen durch den Impaktor und die nachgeschaltete Düse mit einem Endfilter in entsprechende Teilströme aufgeteilt wird.

Erfindungswesentlich bei der Staubsammelvorrichtung ist, daß jeweils der virtuelle Impaktor mit dem nach der Austrittsöffnung der Düse angebrachten Filter konzentrisch um die Achse angeordnet sind. Dadurch wird es möglich, daß die abgetrennten Teilströme durch die gelochten Filter hindurchgeführt werden und über die Ausgänge abgesaugt werden können.

Besonders bevorzugt ist es, im Hinblick auf die europäische Norm EN 481, wenn die Staubsammelvorrichtung zwei hintereinander geschaltete virtuelle Impaktoren aufweist und eine Enddüse mit einem Endfilter. Auf diese Weise ist es nun möglich, aus einem gegebenen Aerosolstrom die entsprechenden Fraktionen nach der europäischen Norm EN 481 mit der erfindungsgemäßen Staubsammelvorrichtung zu klassifizieren.

Besonders bevorzugt ist es dabei, wenn die Impaktoren und die Düsen rotationssymmetrisch in konzentrischer Weise um die Durchströmungsrichtung bildende Achse angeordnet sind.

Vorteilhaft bei der Vorrichtung ist, daß wenn eine entsprechende Dimensionierung des Gehäuses berücksichtigt wird, mit handelsüblichen Filterkassetten gearbeitet werden kann. Die Filterkassetten werden dabei hintereinander, in Reihe, in dem Gehäuse angeordnet. Die Ausgänge zum Absaugen der Teilströme sind dabei mit den Unterseiten der Glasfilter über Fritten verbunden. Dadurch wird ein problemloses und nach Einstellen exaktes Abführen der Teilströme des gegebenen Aerosolstroms gewährleistet.

Eine bevorzugte Ausführungsform sieht nun vor, daß in den Ausgängen Düsen, insbesondere Kapillardüsen zum Einstellen der Volumenströme angeordnet sind. Da die Trenndurchmesser sich bekanntermaßen aus dem Volumenstrom der Luft in der anströmenden Düse und deren Durchmesser $D_o$ nach:

$$d_{tr} = 2.2(\mu\, D_o^3/1000\, Q)^{1/2} \text{ in m,}$$

wobei $\mu$ die Viskosität der Luft ist, errechnet, können so beliebige Trenndurchmesser eingestellt werden.

Die Erfindung betrifft weiterhin ein Verfahren zur Klassifizierung von in Aerosolen enthaltenen Partikeln. Erfindungsgemäß wird dazu eine wie vorstehend beschriebene Vorrichtung verwendet, in der Weise, daß der Aerosolstrom über den Einlaß am Gehäuse der Vorrichtung dem Impaktor und der Düse, die um die Durchströmungsrichtung bildende Achse angeodnet sind, zugeführt, wodurch eine Aufteilung des Aerosolstromes in entsprechende Teilströme erreicht wird.

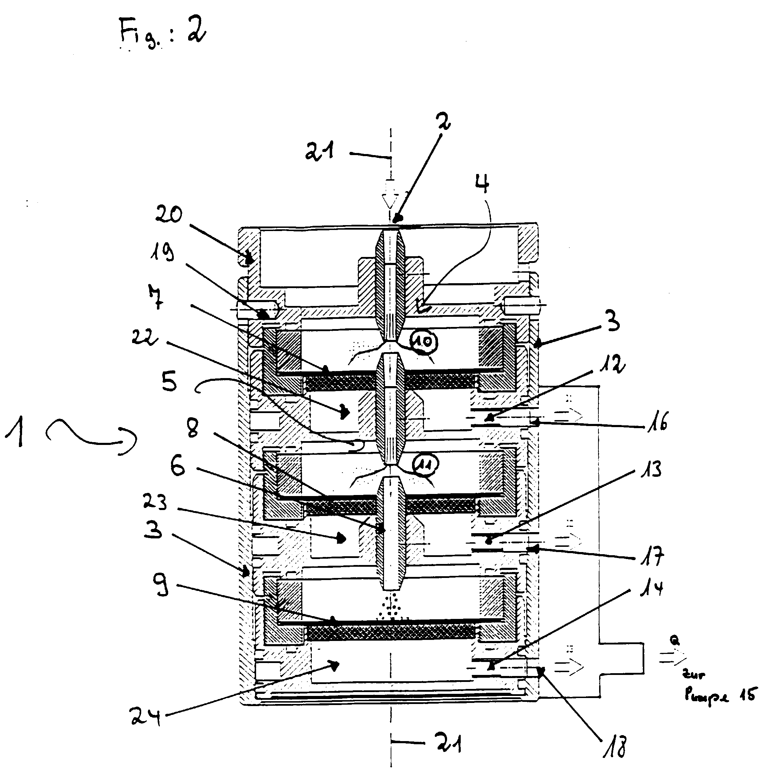

Die Erfindung wird nachfolgend anhand der Figuren 1 und 2 näher erläutert, wobei es sich bei der Vorrichtung nur um eine beispielsweise bevorzugte Ausführung handelt:

Es bedeuten:

Figur 1 die Definitionskurven der Teilfraktionen des luftgetragenen Staubes nach der EN 481

Figur 2 zeigt den Querschnitt einer Staubsammelvorrichtung mit 2 hintereinander geschalteten virtuellen Impaktoren und einer Düse.

Figur 1 zeigt die Definitionskurven der 3 physiologisch relevanten und zu messenden Staubfraktionen nach der EN 481.

Figur 2 zeigt die Ausführungsform der Erfindung mit 2 virtuellen Impaktoren 4, 5 und einer Düse 6 zur Klassifizierung der nach der EN 481 geforderten Partikelfraktionen.

Der Staubsammler 1 besteht demnach aus einem zweistufigen virtuellen Impaktor 4, 5, d.h. aus in Durchströmungsrichtung hintereinander angeordneten virtuellen Impaktoren 4 und 5 mit entsprechenden Filtern 7 und 8, sowie einer Düse 6 mit einem Endfilter 9, die rotationssymmetrisch um die die Durchströmungsrichtung bildende Achse 21 angeordnet sind.

Zum Betrieb des Staubsammlers 1 wird dabei über eine Pumpe 15 das zu messende Aerosol durch den Einlaß 2, der am Deckel 20 des Gehäuses 3 angebracht ist, in den Durchströmungskanal des ersten Impaktors 4 geführt. Am Ende des ersten Impaktors 4 erfolgt eine Strömungsumlenkung 10, derart, daß Partikel mit einem Durchmesser kleiner als ein bestimmter Trenndurchmesser $D_{tr}$ den Stromlinien folgen und auf einem die Umlenkdüsen konzentrisch umgebenden gelochten Filter 7 abgeschieden werden.

Partikel mit größerem Durchmesser folgen aufgrund ihrer Trägheit den Stromlinien nicht, sondern gelangen in den zweiten Impaktor 5. Nach Passieren der Düse des zweiten Impaktors 5 erfolgt eine zweite Umlenkung 11, wobei die den umgelenkten Stromlinien folgenden Partikel auf einem zweiten Filter 8 abgeschieden werden. Auf diesem Filter 8 werden dann alle Partikel mit Durchmesser kleiner als der zweite Trenndurchmesser abgeschieden. Die restlichen groben Partikel scheiden sich dann nach Passieren der Düse 6 auf einem Endfilter 9 ab. Mit der erfindungsgemäßen Vorrichtung und dem Verfahren wird demnach die eingesaugte Luftmenge Q in drei Teilströme $Q_1$, $Q_2$ und $Q_3$ aufgeteilt, wobei $Q_1 > Q_2$, $Q_2 > Q_3$ ist.

Die erfindungsgemäße Ausgestaltung weist weiterhin den Vorteil auf, daß mittels der Kapillardüsen 12, 13, 14 die vor den Ausgängen 16, 17 und 18 angeordnet sind, die Volumenströme eingestellt werden können.

Vorteilhafterweise ist die erfindungsgemäße Vorrichtung so ausgestaltet, daß mittels einer Pumpe 15 der Aerosolstrom durch die virtuellen Impaktoren 4, 5 und die Düse 6 gesaugt wird.

Zur Aufrechterhaltung eines konstanten Volumenstroms ist es dabei vorteilhaft, wenn die Ausgänge mit den Filtern über eine einen Hohlraum aufweisende Fritte 22, 23, 24 verbunden sind. Dadurch wird gewährleistet, daß ein einheitlicher Volumenstrom, der über die Kapillardüsen 12,13,14 eingestellt wird, eingehalten werden kann.

Weiter vorteilhaft bei der erfindungsgemäßen Vorrichtung ist, daß die konzentrisch um die Düsen der Impaktoren 4, 5, 6 angeordneten Glasfilter handelsübliche Filterkassetten darstellen. Dadurch wird ein kostengünstiger Aufbau der gesamten Vorrichtung ermöglicht. Vorteilhafterweise ist das Gehäuse 3 mit einem Deckel 20 versehen, der mittels eines Verschlusses, z. B. eines Bajonettverschlusses 19 verschlossen wird. Nach Öffnen des Spanndeckels 20 ist es nun möglich, die einzelnen Filterkassetten einfach zu entnehmen und der weiteren Bestimmung, z.B. einer gravimetrischen Auswertung oder einer Inhalationsbestimmung zuzuführen.

**Patentansprüche**

1. Staubsammelvorrichtung für in Aerosolen enthaltene Partikel mittels virtueller Impaktoren, bei der in einem Gehäuse (3) hintereinander mindestens ein virtueller Impaktor (4) mit einem nach der Austrittsöffnung seiner Umlenkdüse angeordneten, die nachfolgende Düse konzentrisch umgebenden zentral gelochten ersten Filter (7), und eine Enddüse (6) mit einem nach ihrer Austrittsöffnung angeordneten Endfilter (9) konzentrisch um eine die Durchströmungsrichtung bildende Achse (21) angeordnet sind, und ein am Gehäuse angeordneter Einlaß (2) für den Aerosolstrom und Ausgänge für die abgetrennten Teilströme vorhanden sind.

2. Staubsammelvorrichtung nach Anspruch 1, dadurch gekennzeichnet, daß zwei virtuelle Impaktoren (4,5) mit 2 Filtern (7,8) vorhanden sind.

3. Staubsammelvorrichtung nach Anspruch 1 und 2, dadurch gekennzeichnet, daß die virtuellen Impaktoren (4,5) und die Düse (6) mit den Filtern (7,8,9) rotationssymmetrisch um die Achse (21) angeordnet sind.

4. Staubsammelvorrichtung nach Anspruch 1 bis 3, dadurch gekennzeichnet, daß die Filter (7,8,9) Glasfilter sind.

5. Staubsammelvorrichtung nach Anspruch 4, dadurch gekennzeichnet, daß die Glasfilter in handelsüblichen Filterkassetten integriert sind.

6. Staubsammelvorrichtung nach Anspruch 1 bis 5, dadurch gekennzeichnet, daß die jeweiligen Unterseiten der Filter (7,8,9) über Fritten (22,23,24) mit den Ausgängen (16,17,18) verbunden sind.

7. Staubsammelvorrichtung nach Anspruch 1 bis 6, dadurch gekennzeichnet, daß vor den Ausgängen (16,17, 18) zum Absaugen der Teilströme Düsen, insbesondere Kapillardüsen (12,13,14) zum Einstellen der Volumenströme angeordnet sind.

8. Verwendung einer Vorrichtung nach Anspruch 1 bis 7 zum Abtrennen von in Aerosolen enthaltenen Partikeln wobei ein Aerosolstrom Q über den Einlaß in den virtuellen Impaktor geführt wird und durch den virtuellen Impaktor und die Düse eine Aufteilung in Teilströme erfolgt, wobei die Teilströme über die Filter zu den Ausgängen geführt werden.

9. Verwendung nach Anspruch 8, dadurch gekennzeichnet, daß der Aerosolstrom Q durch zwei Impaktoren und eine Düse in drei Teilströme $Q_1$, $Q_2$, und $Q_3$ aufgeteilt wird.

10. Verwendung nach Anspruch 8 und 9, dadurch gekennzeichnet, daß die Volumenströme der Teilströme über Kapillardüsen mit einer mit der Staubsammelvorrichtung verbundenen Pumpe eingestellt werden.

## Claims

1. Dust collecting device for particles contained in aerosols by means of virtual impactors in which device there are arranged one behind the other in a housing (3) at least one virtual impactor (4) with a centrally perforated first filter (7) which is arranged after the discharge opening of its reverse nozzle and which surrounds the subsequent nozzle concentrically, and a final nozzle (6) with a final filter (9), which is arranged after its discharge opening, is arranged concentrically around the axis (21) forming the direction of through-flow, and there are available an inlet (2) arranged in the housing for the aerosol flow and outlets for the separated partial flows.

2. Dust collecting device according to claim 1, characterised in that
two virtual impactors (4, 5) with two filters (7, 8) are present.

3. Dust collecting device according to claim 1 or 2, characterised in that
the virtual impactors (4, 5) and the nozzle (6) with the filters (7, 8, 9) are arranged rotationally symmetrically around the axis (21).

4. Dust collecting device according to claim 1 to 3, characterised in that
the filters (7, 8, 9) are glass filters.

5. Dust collecting device according to claim 4, characterised in that the glass filters are integrated in commercially available filter cassettes.

6. Dust collecting device according to claim 1 to 5, characterised in that
the respective undersides of the filters (7, 8, 9) are connected to the outlets (16, 17, 18) via frits (22, 23, 24).

7. Dust collecting device according to claim 1 to 6, characterised in that
in front of the outlets (16, 17, 18) there are arranged nozzles for drawing off the partial flows, especially capillary nozzles (12, 13, 14) for adjusting the volume flows.

8. Application of a device according to claim 1 to 7 for separating particles contained in aerosols, an aerosol flow Q being directed via the inlet into the virtual impactor and a separation into partial flows being effected by the virtual impactor and the nozzle, the partial flows being directed through the filters to the outlets.

9. Application of a device according to claim 8, characterised in that

the aerosol flow Q is divided into three partial flows Q, Q and Q by two impactors and a nozzle.

10. Application of a device according to claim 8 and 9 characterised in that
the volume flows of the partial flows are adjusted via capillary nozzles by a pump connected to the dust collecting device.

**Revendications**

1. Dispositif collecteur de poussières pour des particules contenues dans des aérosols au moyen d'impacteurs virtuels,
caractérisé en ce que

- on dispose dans un boîtier (3) l'un derrière l'autre au moins un impacteur virtuel (4) avec un premier filtre (7) qui est disposé après l'orifice de sortie de sa buse de changement de direction et qui est troué au centre en entourant de façon concentrique la buse qui suit, et une buse terminale (6) avec un filtre terminal (9) qui est disposé après son orifice de sortie de façon concentrique autour d'un axe (21) qui constitue la direction de l'écoulement, et
- l'on a une entrée (2) qui est disposée sur le boîtier pour le courant d'aérosol, et des sorties pour les courants partiels séparés.

2. Dispositif collecteur de poussières selon la revendication 1,
caractérisé en ce que
l'on a deux impacteurs virtuels (4, 5) avec deux filtres (7, 8).

3. Dispositif collecteur de poussières selon la revendication 1 et 2,
caractérisé en ce que
les impacteurs virtuels (4 et 5) et la buse (6) sont disposés avec les filtres (7, 8 et 9) de façon symétrique de révolution autour de l'axe (21).

4. Dispositif collecteur de poussières selon les revendications 1 à 3,
caractérisé en ce que
les filtres (7, 8 et 9) sont des filtres en verre de frittage.

5. Dispositif collecteur de poussières selon la revendication 4,
caractérisé en ce que
les filtres en verre de frittage sont intégrés dans des cassettes que l'on trouve dans le commerce.

6. Dispositif collecteur de poussières selon les revendications 1 à 5,

caractérisé en ce que
les côtés inférieurs respectifs des filtres (7, 8 et 9) sont reliés aux sorties (16, 17 et 18) au moyen de compositions de matières vitrifiables (22, 23 et 24).

7. Dispositif collecteur de poussières selon les revendications 1 à 6,
caractérisé en ce que
des buses, en particulier des buses capillaires (12, 13 et 14) servant à régler les débits, sont disposées avant les sorties (16 17 et 18) pour aspirer les courants partiels.

8. Utilisation d'un dispositif selon les revendications 1 à 7, pour séparer des particules contenues dans des aérosols,
caractérisée en ce que

- l'on fait passer un courant d'aérosol Q via l'entrée dans l'impacteur virtuel et
- l'on réalise à travers l'impacteur virtuel et la buse une division en courants partiels, en amenant les courants partiels aux sorties via les filtres.

9. Utilisation selon la revendication 8,
caractérisée en ce que
le courant d'aérosol Q est divisé par deux impacteurs et une buse en trois courants partiels $Q_1$, $Q_2$ et $Q_3$.

10. Procédé selon la revendication 8 et la revendication 9,
caractérisé en ce que
les débits des courants partiels sont réglés par l'intermédiaire de buses capillaires avec une pompe qui est reliée au dispositif collecteur de poussières.

Fig. : 1

Fig.: 2